# EUROPEAN PATENT APPLICATION

(11) **EP 1 225 548 A2**
(43) Date of publication of application: **24.07.2002**
(21) Application number: 02250446.8
(22) Date of filing: 22.01.2002
(51) Int. Cl.: G07F 7/02, G07F 5/16

(54) **Discount method and device for an automatic vending machine**

(30) Priority: 23.01.2001 US 767792
(71) Applicant: Mars Incorporated, McLean, Virginia 22101-3883 (US)
(72) Inventor: Lewis, Craig A, Berwyn, Pensylvania 19312 (US); Morun, Mark, West Chester, Pensylvania 19380 (US)
(74) Representative: Burke, Steven David

(57) **Abstract**

A coin mechanism discount method and a discount device for an automatic transaction machine. The method and the discount device provide a way for a transaction machine to give discounts on selected vend items.

## Description

### Background of the Invention

The invention generally relates to a coin mechanism discount method and a discount device for an automatic transaction machine. In particular, the method involves recognizing deposited coins, bills or cards and a discount means such as a token or coupon, and dispensing an item or service if preset conditions are met.

Typical automatic vending machines contain vend items at preset prices. A purchaser sees the actual items along with associated price labels behind a glass enclosure or items represented on the vending machine itself. The purchaser is able to purchase the vend item of his or her choice by depositing coins or bills or a combination thereof in an amount equaling or exceeding the preset price of the vend item into the apertures provided, and then selecting the item by pushing buttons corresponding to the item. The vend item is dispensed and change is returned for any amount over the preset price.

### Summary of the Invention

The coin mechanism discount method and the discount device of the disclosure below provides a way to give discounts on preset prices of vend items in an automatic vending machine by accepting a discount means such as a token or coupon. The method employs a discount device that can accept and validate cash or a type of cards, such as credit cards or prepay debit cards, and a discount means such as a token or coupon. When a purchaser selects an item, the vending price of the selected item, the discount value associated with the selected item, and the total cash or card deposited are evaluated to give a discount to the vending price of the selected item.

When coins or bills - defined as cash - are inserted through the apertures provided on the automatic vending machine, coin signals can be generated by the discount device to count the amount deposited. In an implementation, a "phantom" coin signal can be generated for the count for the token or coupon. The term "phantom" is used in connection with signals of the discount means as opposed to those of the deposited cash. When a card is used in conjunction with a discount means, the vending price of the selected item is charged to the card, but a credit may be given for the discount value of the discount means.

The discount value may be extracted from a table or a list in an internal storage medium in connection with the token or coupon or may be read off directly from the token or coupon. The discount device can send signals to vend the item through a dispenser and to give change through a coin return dispenser by evaluating the total deposited, the preset vending price, and the discount value based on the appropriate coin signals generated by the discount device.

The method for providing discounts on a vend item in an automatic vending machine can be executed as follows. After the discount means is deposited and recognized, a vend item selected, and a discount value recalled from a storage medium or read off from the deposited discount means, the total cash deposit is compared with the vending price less the discount value or, equivalently, the total cash deposit plus the discount value is compared with the vending price. If the total cash deposit is greater than or equal to the vending price less the discount value or, equivalently, if the total cash deposit plus the discount value is greater than or equal to the vending price, the item is dispensed. Change is then given. For the purposes of giving credit for the discount value, the discount value may be added to the total cash or card deposit, or subtracted from the vending price.

When a purchaser deposits cash or a card and a discount means but tries to abort the transaction before selecting an item, returning cash for the deposited token or coupon can be prevented by suspending the transaction until enough cash or a credit is deposited for the purchase of a vend item. Only after the vend item is selected and dispensed, can change be given for the total cash deposited over the vending price less the discount or, equivalently, the total cash deposit plus the discount value minus the vending price. Change may not be given if a credit card or prepay card is used in conjunction with the discount means because usually an exact amount can be charged to the card. If the amount that can be charged to the card is insufficient, then additional cash may be requested. Force vending an item precludes exchanging the token or coupon for cash. After the above transaction has been completed, a token or coupon may be dispensed to encourage the purchaser to make additional vending purchases.

Alternatively, only the cash or card, but not the token or coupon, may be returned when the transaction is aborted because of the decision made by either the purchaser or the vending machine (e.g. items sold out). Another alternative is to return the cash or card and the token or coupon. Still another alternative is to return the cash or card and the cash value of the token or coupon.

The discount associated with the usage of tokens or coupons can be based on time. During a certain time of day, the value of the discount can be increased or decreased, or the use of the discount means can be blocked out during a certain parts of the day and accepted at other times. Alternatively, the token or coupon can be used to trigger a preset discount period, during which time a discount can be given for selected items.

The discount can be based on groups. A discount value can be applied to a selected group of items.

The discount can be based on items. The discount can be made applicable to pre-determined items in the vending machine. Furthermore, the discount can be made to vary from item to item.

The discount can be based on combinations of time, item, and group. A particular item or a group of items can be made to have a discount value during a certain period of the day and a different discount value at other times.

The token or coupon can be further given a serial number - encoded as a bar code, for example - and distributed to purchasers. When the token or coupon is presented to a vending machine with a discount device, the discount value of the token or coupon can be ascertained based on the serial number read from the token or coupon.

In another implementation, a discount means including a token or coupon can have a memory element, such as a magnetic strip or a chip, for storing the number of times the purchaser has used the discount means to vend an item and can be updated to indicate the number of times the discount means was used on the memory element. After the item is vended, the discount means can be returned to the purchaser for reuse. When the number of uses equals a preset number, a bonus, such as a free vend item or items or a very high discount on the selected item, can be given to the purchaser.

### Brief Description of the Drawing

Fig. 1 is a cutaway side view of an automatic vending machine including a discount device according to an implementation of the invention.

Fig. 2 is a cutaway side view of an automatic vending machine including a discount device with a printer for printing out discount coupons according to an implementation of the invention.

Fig. 3 is a simplified block diagram illustrating electronic connections of the main components of a discount device according to an implementation of the invention.

Fig. 4 is a simplified block diagram illustrating electronic connections of the main components of another implementation of a discount device including a printer for printing out discount coupons according to an implementation of the invention.

Fig. 5 is a general flow-diagram of a discount method for an automatic vending machine according to an implementation the invention.

### Detailed Description

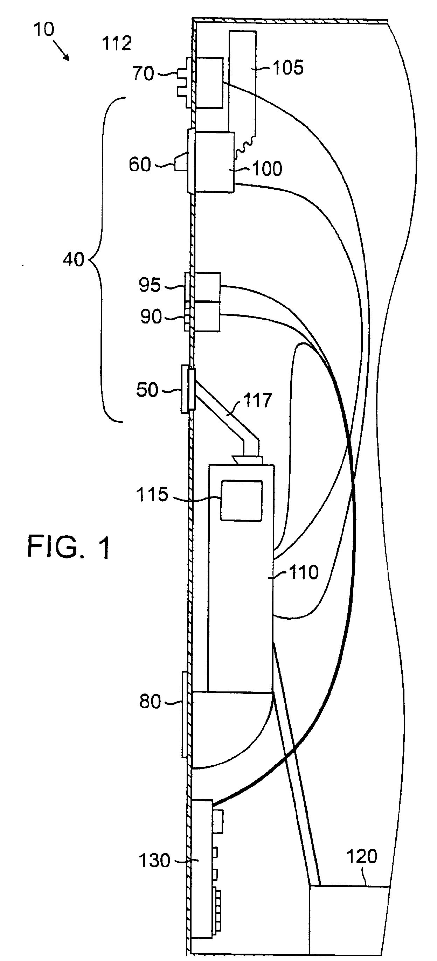

Fig. 1 is a cutaway side view of an automatic vending machine, illustrating the component layout of an implementation of the discount device 10. A control panel 40 has a card opening 70, a bill entryway 60, a display 95, a keypad 90, and a coin slot 50. A coin mechanism 110 is connected to a coin passage way 117. Coins inserted through the coin slot 50 drop through the coin passage way 117 and are processed in the coin mechanism 110. A coin box 120 connected to the coin mechanism 110 accepts the coins after they have been processed in the coin mechanism 110. The coin mechanism 110 is also connected to a coin return 80 for returning coins when a transaction is aborted or completed. A bill validator 100 is located behind the bill entryway 60. Validated bills are stacked in a bill stacker 105, which is attached to the bill validator 100. A card reader 112 is located behind the card opening 70 where an electronic purse device, credit card, or debit card may be accepted. The display 95 and the key pad 90 are electronically connected to a vending controller 130. In this implementation, the bill validator 100 and the card reader 112 are electronically connected to the coin mechanism 110. The coin mechanism 110 is in turn electronically connected to the vending controller 130.

The coin mechanism 110 can manage the activities of the bill validator and the card reader 112 as well as control a coin validator 115 within the coin mechanism 110. The bill validator 100 can also validate discount coupons, and the coin validator 115 can also validate discount tokens. Either the coin mechanism 110 or the vending controller 130 can manage the total credit information including the discount information. The vending controller 130 can control the vending of a selected item. The coin mechanism 110 may issue a token through the coin return 80 to further entice the customer to buy another vend item in the same or in another vending machine. In an implementation, the vending controller may be set to dispense a token provided that no token was used to purchase the item. Alternatively, the vending controller may be set to dispense a token anytime an item is purchased regardless of whether a token was used.

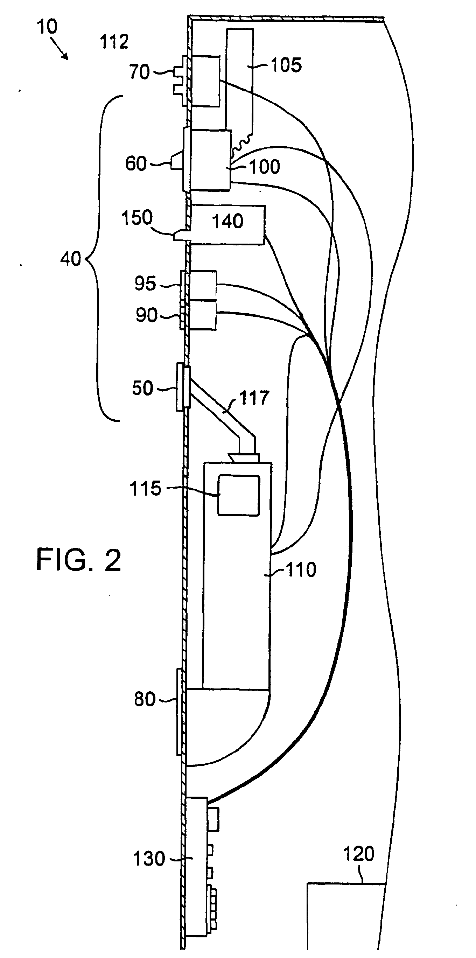

Fig. 2 is a cutaway side view of another implementation of a discount device 10 in a vending machine that includes an internal printer 140 for dispensing a coupon. The printer 140 is electronically connected to the vending controller 130 and is operable to print out discount coupons, which are dispensed through a coupon dispenser slot 150. The controller 130 can be set to dispense a coupon if no coupon was recognized and processed during the course of a transaction, or can be set to dispense a coupon regardless of whether a coupon was used to purchase an item.

Many other configurations are contemplated. For example, coupons or tokens may be inserted thorough a dedicated entryway separate from the bill validator 100 or the coin validator 110, each entryway connected to a dedicated coupon or token validation device and a collection box. Another configuration may operate to dispense a preprinted form of a discount coupon instead of using an internal printer 140 to print out coupons.

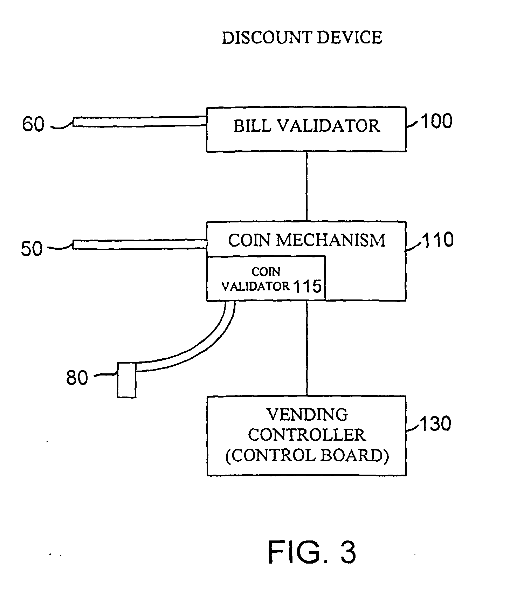

Fig. 3 is a simplified block diagram illustrating an implementation of the electronic connections of the coin mechanism 110 with other components. The coin mechanism 110 containing the coin validator 115 is electronically connected to the bill validator 100 and the vending controller 130. When a token or coupon and cash are deposited through the coin slot 50 or the bill entryway 60 and validated by the coin validator 115 or the bill validator 100, the coin mechanism 110 can process the token or coupon together with the coins and bills. The coin mechanism 110 can detect the selection of an item and process the vending price of the selected item and the discount value associated with the token or coupon. Alternatively, the vending controller 130 or other components of the discount device can perform this function.

In an implementation, the coins and bills are registered by the coin mechanism 110 as coin signals and these signals are sent to the vending controller 130. The coin mechanism may pass the received coin information individually as each coin is received or cumulatively by sending the total value received. The discount value may be extracted directly from a token or coupon upon validation and may be transmitted to the coin mechanism 110 or the vending controller 130. Alternatively, the token or coupon may have a preset discount value retrieved by the coin mechanism 110 or the vending controller 130. After the validation of the token or coupon, the coin mechanism 110 or the vending controller 130 may associate a discount value to a particular vend item that has been selected. The discount value can easily be made to vary from vend item to vend item.

In another implementation, phantom coin signals corresponding to the discount value of the inserted token or coupon can be generated and then transmitted to the vending controller 130. The phantom coin signals are equivalent to coin signals generated from deposited cash and are processed by the vending controller in the same manner. The vending controller 130 then evaluates the total transaction value in reference to the total cash or card deposited, the vending price of the item selected and the discount value. Alternatively, the signals can be evaluated by the coin mechanism 110 to calculate the total transaction value. If the total deposited value equals or exceeds the vending price less the discount value of an item or, equivalently, if the total deposited value plus the discount value equals or exceeds the vending price, or if an equivalent formula is satisfied, the item is dispensed and any change required is returned through the coin return 80. The cash change can be the total deposited value plus the discount value minus the vending price or, equivalently, the total deposited value minus the vending price less the discount value or some other equivalent formulation.

If the total value inserted is less than the vending price less the discount value of the item or, equivalently, if the total value plus the discount value is less than the vending price or if an equivalent formulation is satisfied, the vending controller 130 can suspend the transaction pending the receipt of more coin signals from the coin mechanism 110. Such operation prevents the vending machine from returning cash for tokens or coupons because the return function is disabled. In this implementation, the vending machine controller 130 can wait until the total deposit equals or exceeds the vending price less the discount value or until an equivalent formulation is satisfied. Thus, when a token or coupon is deposited as partial payment, no coins are returned as change until after an item is selected and dispensed.

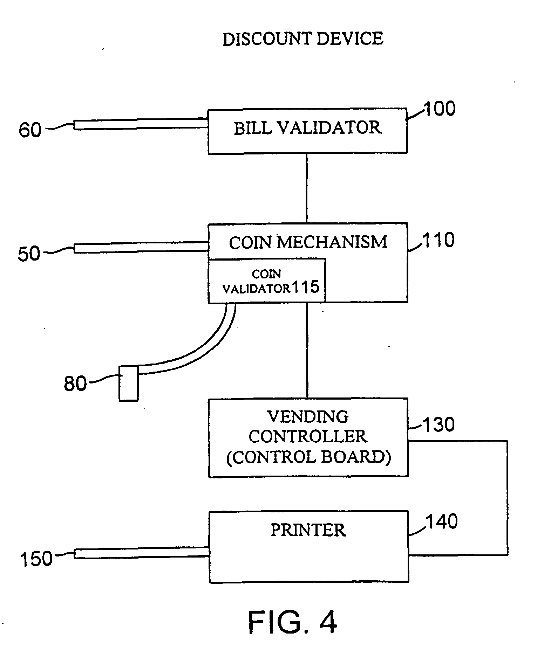

Another implementation is shown in Fig. 4. The coin mechanism 110 is electronically connected to the vending controller 130 and the bill validator 100 as in Fig. 3. The vending controller 130 is connected to an internal printer 140 that is capable of dispensing coupons through the coupon dispenser 150. But the coin mechanism 110 or the bill validator 100 could also be connected directly to the printer 140. The bill validator 100 in this implementation recognizes a coupon and sends signals to the coin mechanism 110 acknowledging its use. After appropriate signals are received from the coin mechanism 110 and the item is selected and dispensed, the vending controller 130 can send signals to the printer 140 to print out a coupon. The generated coupon can be customized to the purchaser. For example, the coupon can be encoded such as by a bar code to give a discount on the same item for the next transaction if a discount was not used, or give an increased discount next time on the same item even if a discount was used. Alternatively, a pre-printed form of a coupon can be dispensed instead of being printed by the printer 140, or a token may be dispensed via the coin mechanism 110 when instructed by the vending controller 130 after a vending transaction.

The application of the discount with the deposit of tokens or coupons can be based on time. During a certain time of day, the discount can be blocked out but accepted at other times. For example, from 8:00 am to 2:00 pm, tokens or coupons can be rejected but from 2:00 pm to 5:00 pm they can be accepted; from 5:00 pm to 9:00 pm they can be rejected again; and from 9:00 pm to 8:00 am the next day they can be accepted. The time when the tokens or coupons are accepted or rejected can be tailored to the location and the historical use of the vending machine. Alternatively, a token or coupon can be set to trigger a discount period to start. Upon receiving and recognizing a token or coupon, the vending machine can be set to discount vend items for a preset period of time such that items purchased during the preset period may be discounted accordingly. Also, tokens or coupons themselves can be used to enable or disable a vending machine to give discounts. For example, one type of coupon may enable the vending machine to give discounts and another type may disable it to stop giving discounts. The enabling coupon can be different from the disabling coupon, or the same type of coupon may be used to toggle between the enabling state and disabling state. A bar code on the coupon can be read to enable or disable the discounts.

The discount can be based on groups. The discount can be triggered if a group of items is selected. For example, if a certain combination of specified items is selected for vending, a discount can be given for that group such that the group vending price would be lower than the sum of the individual vending prices. For example, for a group purchase of two items with a token or coupon, the first item can be purchased at a regular price, which triggers giving a discount for the selected second item.

The discount can be based on items. The discount can be made applicable to pre-determined items in the vending machine. With the deposit of a token or coupon, only the items subject to discounts may be made available for purchase by disabling purchase of non-discount items. Furthermore, the discount can be made to vary from item to item or from group of items to group of items. For example, a new vend item can have a discount value that is greater than the usual vend items subject to a discount. In another case, a high-profit margin item may be grouped together with a lower-profit margin item and give a discount based on the purchase of the group of those items.

The discount can be based on combinations of time, item, and group. For example, a particular item or a particular group of items can be selected to have a very high discount value at a certain time period and a lower discount value at another time. A particular example would be to have a 50% discount value outside a preset lunch period but have the usual discount value during the lunch period. Another example would be to give a discount for a particular item only during a discount period triggered by the deposit of a token or coupon.

The tokens or coupons can be used to dispense free vend items. The free vend items can be unrestricted such that any selected item can be dispensed with the token or coupon. Alternatively, the free vend item may be restricted to a specific item. Also, the free vend item may be restricted by price range. That is, for a token or coupon, a free vend item may be given within a predetermined price range. Furthermore, the free vend item can be restricted to a specific time of day or to a specific period of time.

The token or coupon can be used to enable a specific function such as enabling a vending machine to vend a specific item that is normally not for purchase without the token or coupon. The token or coupon may function to trigger the vending machine for a predetermined time period or enable/disable the vending machine to give change.

The token or coupon used to trigger a free vend may not be returned generally, but it may be returned if it is used to enable specific functions such as those described above, or, if it is used to toggle a vending machine to enable or disable discounts, or if it is or used to obtain a discount on a specific item. The returned token or coupon can then be reused.

The token or coupon given to the purchaser can be further encoded with a serial number, such as a bar code. When the token or coupon is presented to a vending machine with a discount function, the discount value of the token or coupon can be ascertained by reading the serial number.

In another implementation, a discount means, a token, a coupon or a card, can have a memory element, such as a memory chip or a magnetic strip, on the discount means for reading the number of vend purchases made and the types of items purchased from the memory element, and for updating the number of purchases and the types of purchased items on the memory element. After the item is vended, the discount means can be returned to the purchaser for next use. When the number of purchases equals a preset number, or when the number of a certain type of item purchased equals a preset number, a bonus, such as a free vend item or group of items, or a very high discount on the selected item, can be given to the purchaser. With a discount means of this type, the discount device may keep track of the number of purchases and the type of items purchased and give out bonus discounts based on that information.

Furthermore, the vending machines can be networked to a remote central management system to keep track of any activities associated with the use of tokens or coupons. For example, information on how many tokens or coupons were used and what items were purchased with the token or coupon and at which particular vending machine, can be transmitted to and tabulated by the remote management system. The information can be used to track purchases of individual consumers who were issued particular tokens or coupons. The individual consumer can be rewarded with bonuses or special discounts on particular vending items by issuing tokens or coupons based on the consumer's history of purchases tracked by the remote management system.

The discount device may be implemented to give out pertinent information on the use of tokens or coupons with a deposit of a token or coupon along with an appropriate input of a personal identification number (PIN). Information that can be obtained from the discount device would include, for example, the token or coupon number, an associated code for the token or coupon, how the token or coupon was used in terms of preset codes, the value of vended items or discounts, and the number of vending items dispensed or tokens received. The information can be printed out from the printer 140. For a networked vending machine, the information can be sent to the remote central management system for calculation and tabulation.

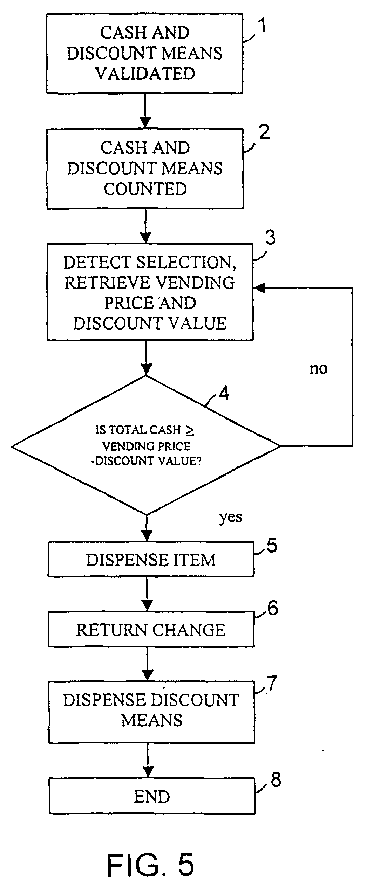

Fig. 5 shows a flow-diagram of the discount process in a vending machine according to one implementation of the invention. In step 1, cash and discount means -- a token or coupon -- are validated. In step 2, the validated cash and the discount means may be converted into coin signals to keep a running total. In step 3, a selection of an item is detected and the vending price and the discount value are retrieved. The discount value may be read off directly from the discount means upon validation, or may have one preset value, or may be associated with a particular item or a group of items selected so that the discount value may vary from item to item or from group to group. In step 4, the running cash total along with the discount value is compared with the vending price. If the running cash total is less than the vending price less the discount value, or equivalently, if the running cash total plus the discount value is less than the vending price, the flow goes back to step 3 to wait for another selection or more cash to be deposited. If the running total is equal to or greater than the vending price less the discount value, or if an equivalent formulation is satisfied, the selected item is dispensed in step 5. In step 6, any amount over the vending price less the discount value, i.e. the total deposit minus the vending price less the discount value (or its equivalent formulation) is returned as change. In step 7, a discount means may be dispensed if certain conditions are met as described above, and in step 8 the transaction is terminated.

Further conditions can be defined in the above discount process. For example, in step 1, a limit can be placed to accept only one token or coupon per vending transaction. If more than one token or coupon is inserted, those tokens or coupons are returned immediately to the customer. Alternatively, step 1 can be made to accept a multiple but limited number of tokens or coupons to give a cumulative discount per vending transaction. For example, a limit on the number of tokens or coupons accepted can be set to two to provide a cumulative discount of two times the single discount value for a selected item. Alternatively, instead of limiting the number of the discount, the total cumulative discount value may be set to a predetermined value such as 50% off the total vending price of an item.

In another implementation, in step 1, the discount means can be validated only for a specific time period or period in a day. The discount means can be blocked out at all other times. If the discount means is not applicable because of the blocked out time, it can be returned immediately. Alternatively, the discount period may be triggered to start by the validation of the token or coupon and terminate after a preset period of time. During the discount period, the discount may apply to all or only to selected items.

In between steps 1 and 3, if a customer decides to abort the transaction before selecting a vend item by pushing a return button, the deposited cash can be returned if no token or coupon was inserted. However, if a token or coupon was used, the customer may be prevented from aborting the transaction. The return button is disabled until the selection is dispensed to avoid returning cash for the token or coupon. In another implementation, if a customer aborts the transaction between steps 1 and 3, the vending machine may be set to return the deposited cash and any deposited token or coupon. Alternatively, the deposited cash and the cash value of the inserted token or coupon can be returned.

In step 2, the discount value can be counted as having a value independent from the item or group of items and added to the cash or card deposited (or subtracted from the vending price), or it can depend on the item or group of items selected in step 3, in which case the calculation of the discount value is held off until the selection is made. In the latter case, the discount value still may have a preset value in reference to the item or group of items selected.

Alternatively, the discount provided by the token or coupon can be calculated as a percent discount. This can be accomplished by appropriately marking-up the cash count in some integral increments (e.g. 5 cent increments) to reflect the discount. For example, for a fixed 25% discount off a vending price, the first quarter deposited can be counted as 1.333 * .25 cents, which when rounded down to the nearest nickel results in a marked-up value of 30 cents. The second quarter can be calculated as 1.333*.50-.30 cents, which results in 35 cents when rounded down. The third quarter can be calculated as 1.333*.75 - .60 to give 35 cents with the round down. The result is that for 75 cents deposited, a $1.00 credit is given. In this scheme, the calculated marked-up value above the vending price in step 6 can be marked-down by 25% and rounded down (or up) to the nearest nickel to reflect the real cash value in case change is necessary, or alternatively, the marked-up calculation can be terminated above the vending price and adjusted accordingly.

In step 3, the discount value of the selection may be made to vary depending on the selection. One item may be associated with one discount value and another item associated with a different discount value. For example, a more expensive item may have a greater discount value than a less expensive item. In this implementation, the discount value may be stored internally and associated with the selected item rather than being read off from an inserted token or coupon.

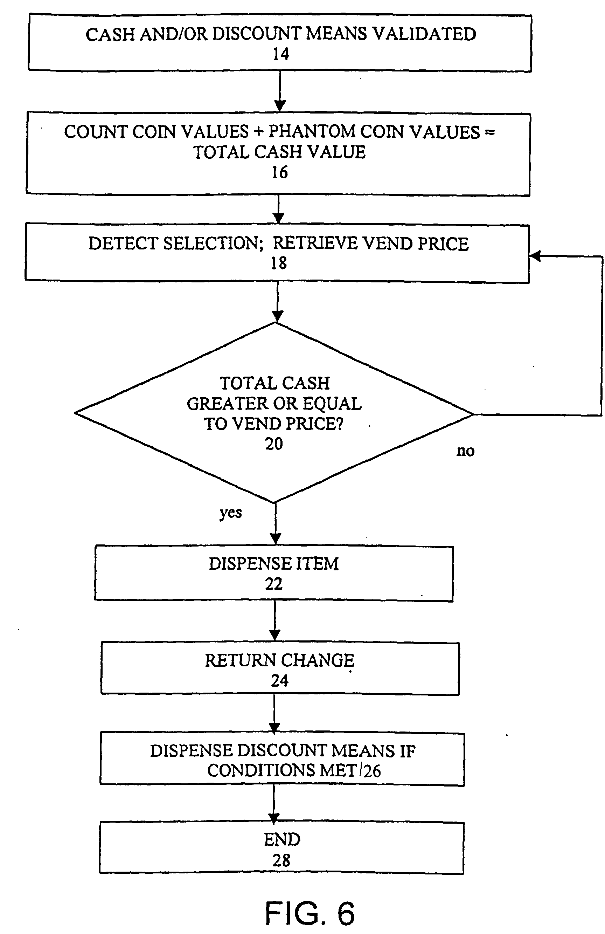

Figure 6 is a flow diagram illustrating an alterative discount process implementation. Cash and/or discount means are validated 14. The cash means generate a coin value and the value of a discount means, such as a coupon or token, is translated into a phantom coin value. The validated coin values and phantom coin values are added 16 to generate a total cash value. When a vend selection is detected 18 a vend price is then retrieved and compared 20 to the total cash value. If the total cash value is less than the vend price then the flow gives back to the selection block 18 to await a new selection and/or for more cash to be deposited. If the total cash is equal to or greater than the vend price, then the item is dispensed 22 and any required change is returned 24. A further discount means may be dispensed 26 if certain conditions, explained above, are met. The process then ends at 28.

In this implentation, the value of tokens or coupons are translated into coin signals which may be transmitted to the vending controller 130. The vending controller then only sees cash (coin) signals and does not have to be capable of calculating any discounts. Thus, the appropriate software to generate the phantom coin signals could be resident in only the coin validator (for tokens) or the bill validator (for coupons) or in another discount device. Consequently, an existing automatic translation machine can be easily upgraded without having to change the vending controller software.

In another implementation, some items may be subject to a discount while other items may be preset to not have any discount associated with them. A selection may be checked to determine whether it is subject to a discount. If it is, the discount is applied in the proceeding steps. If not, the transaction can be held for another selection or, if enough cash has been deposited, proceed with the transaction.

In another implementation, a discount may be given to a group of items. A group of items can be selected, for example, by selecting a multiple group selection mode, which allows for selecting a number of items for vending in a single vending transaction. A discount value can be applied to the selected group in such a way that the total purchase price, including the discount value, of the grouped items is less than the sum of individual purchase prices (may or may not include the individual discount values) of the same items purchased separately. One example would be if the number of items purchased is two, a certain prefixed discount may be given, if three, an additional discount may be given, if four, then still some more until a preset limit to the number of the items or the discount value is reached.

Alternatively, a predetermined group of items can be selected for vending. The items are pre-grouped for selection by a purchaser with a discount value given to the group such that the total purchase price, including the discount value, of the grouped items is less than the sum of the purchase prices, which may or may not include the individual discount values, of the same items purchased separately.

A token or coupon may be dispensed regardless of whether any token or coupon is used to purchase an item. Alternatively, dispensing of a coupon may be made conditional by dispensing a token or coupon only when no token or coupon is used to purchase an item.

A special executive vending feature that bypasses the above steps may be incorporated into the vending machine. For example, after depositing a token or coupon and entering a security code on the keypad 90, a person may be allowed to specify a number of cups of free coffee in one transaction.

The token or coupon serves as an enticement for a customer to make further vending purchases. For example, many vending machine owners have several vending machines next to one another that contain different types of products, such as soft drinks in one and snacks in another. If a consumer purchases a soft drink, then a snack coupon may be dispensed to encourage the customer to buy a snack to go with the drink from another vending machine that accepts coupons. If a snack has been purchased, then a coupon may be issued for purchase of a drink. In addition, the coupon may be redeemable in any vending machine capable of validating it, including the vending machine that dispensed the coupon.

While various implementations have been described and shown in the drawings, the implementations are merely illustration and not restrictive of the broad invention. Consequently, other implementations are within the scope of the following claims.

## Claims

1. A method for providing discounts for items in an automatic transaction machine comprising:
validating cash or card and a discount means having an associated discount value;
detecting a selection of an item or a group of items, each having a preset vending price; and
discounting the vending price of the item or group of items according to the discount value.

2. The method of claim 1 further comprising:
processing the discount value as a phantom coin signal.

3. The method of claim 1 further comprising providing an item or service if the vending price is matched or exceeded.

4. The method of claim 3 further comprising:
terminating the vending operation before the item or the group of items is vended; and
returning a validated card but not the discount means.

5. The method of claim 3 further comprising:
terminating the vending operation before the item or the group of items is vended; and
returning a validated card and the discount means.

6. The method of claim 1 further comprising:
terminating the vending operation before the item or the group of items are vended; and
returning the validated cash or card, and cash corresponding to the discount value.

7. The method of claim 1 further comprising validating the discount means only during a pre-determined time period.

8. The method of claim 1 further comprising allowing vend items to be discounted by the discount value for a preset period of time upon validating the discount means.

9. The method of claim 1 or 8 further comprising varying the discount value according to the selected item or group.

10. The method of claim 3 further comprising:
returning change for the total value of the validated cash plus the discount value less the total vending price of the selected item or group, or the total value of the validated cash less the sum of the total vending price and the discount value upon dispensing the item or group of items.

11. The method according to claim 1 further comprising:
rejecting and returning any additional discount means after one discount means has been validated.

12. The method according to claim 1 further comprising:
accepting and validating a number of discount means each with a discount value to give a cumulative discount per transaction of the vend item selected.

13. The method according to claim 1 further comprising:
determining the discount value based on the selection of the item or the group and the time.

14. The method according to claim 1 further comprising dispensing a discount token or coupon.

15. The method according to claim 14 further comprising:
dispensing the discount token or coupon only if no discount means has been used to purchase the vend item.

16. The method according to claim 1 further comprising:
waiting for additional deposit of cash or card or discount means if the total value of the validated cash or card is less than the total vending price of the selected item or group less the discount value.

17. The method according to claim 1 further comprising:
waiting for additional deposit of cash or card or discount means if the total value of the validated cash or card and the discount value is less than the total vending price of the selected item or group.

18. The method of claim 1 further comprising:
calculating the discount value as a fractional value of the vending price of the selected item or group.

19. The method of claim 1 further comprising:
validating the discount means by reading information off the discount means, the information containing the discount value.

20. The method of claim 1 further comprising: reading information off the discount means and updating information on the discount means during validation of the discount means, and returning the discount means for reuse.

21. The method of claim 20 further comprising reading the number of times the discount means was used to vend an item or a group of items off the discount means; and updating the number of times the discount means is used to vend an item of a group of items on the discount means.

22. The method of claim 21 further comprising providing a bonus if the number of times the discount means was used equals a preset number.

23. The method of claim 22 wherein the bonus is a fractional value of the vending price and greater than the discount value.

24. An article comprising a computer-readable medium that stores computer-executable instructions for causing a computer system to perform a method as claimed in any preceding claim.

25. The article according to claim 24 further including instructions for causing the computer system to:
give a bonus equal to the vending price if the number of times the discount means was used equals a preset number.

26. A discount device for an automatic vending machine comprising:
a validating means for validating a discount means having a discount value;
a coin mechanism connected to the validating means, for converting the discount value into a signal and processing a preset vending price of a vend item or group of vend items and the discount value; and
a control means connected to the coin mechanism, for receiving the signal from the coin mechanism and controlling the vending of the vend item or the group of vend items.

27. The device according to claim 26 wherein the signal of the discount value is a phantom coin signal.

28. The device according to claim 26 further comprising a cash validating means for validating cash.

29. The device according to claim 26 further comprising a card validating means for validating a card.

30. The device according to claim 26 wherein the discount value is determined from the discount means.

31. The device according to claim 26 wherein the discount value has a fixed value.

32. The device according to claim 26 wherein the discount value depends on the vend item.

33. The device according to claim 26 wherein the discount value depends on the time of the day.

34. The device according to claim 26 wherein the discount value depends on the group of vend items.

35. The discount device according to claim 26 further comprising:
a printing means for printing a coupon.

36. The discount device according to claim 26 wherein the printer is configured to print a coupon if no discount means is used to purchase the vend item.

37. The discount device according to claim 26 wherein the printer is configured to print a coupon that has a discount value greater than the discount value of the discount means used to purchase the vend item.

38. The device according to claim 28 wherein the information of the validated cash, the discount means, the vending price and the discount value are evaluated by the coin mechanism to determine whether the total value of the cash exceeds or equals the vending price less the discount value of the discount means.

39. The device according to claim 28 wherein the information of the validated cash, the discount means, the vending price and the discount value are evaluated by the control means to determine whether the total value of the cash exceeds or equals the vending price less the discount value of the discount means.

40. A discount device for processing discounts on a vend item in a vending machine, causing to:
process a discount means having a discount value as a phantom coin signal,
discount the vend item according to the discount value associated with the phantom coin signal.

41. The discount device according to claim 40 wherein a coin mechanism configured to receive cash and the discount means processes the phantom coin signal to give a discount on the vend item.

42. The discount device according to claim 40 wherein a control means configured to control the vending of the vend item processes the phantom coin signal to give a discount on the vend item.

43. The discount device according to claim 40 wherein the device is networked to a central system configured to track and monitor information associated with the discount means.

44. The discount device according to claim 43 wherein the information associated with the discount means is calculated to produce the number of the discount means used, the type of items purchased with the discount means, and the location of the discount device.

45. The discount device according to claim 40 further causing to:
dispense a free vend item after processing the discount means when a code is entered on a keypad connected to the discount device.

46. The discount device according to claim 45 wherein the discount means is not returned after vending the free vend item.

47. The discount device according to claim 40 wherein the discount means is returned after dispensing the vend item discounted according to the phantom coin signal.
